# EUROPEAN PATENT SPECIFICATION

(11) **EP 3 958 599 B1**
(45) Date of publication and mention of the grant of the patent: **30.04.2025**
(21) Application number: 20732463.3
(22) Date of filing: 20.02.2020
(51) Int. Cl.: H04W 8/02, H04W 12/06, H04W 76/10, H04W 60/04

(54) **NETWORK ROAMING AND INTERCOMMUNICATION METHOD AND SYSTEM**
NETZWERK-ROAMING, INTERKOMMUNIKATIONSVERFAHREN UND SYSTEM
PROCÉDÉ ET SYSTÈME D'ITINÉRANCE ET D'INTERCOMMUNICATION DE RÉSEAU

(30) Priority: 19.04.2019 CN 201910320128
(43) Date of publication of application: 23.02.2022
(73) Proprietor: ZTE Corporation, Shenzhen, Guangdong 518057 (CN)
(72) Inventor: GUO, Hua, Shenzhen, Guangdong 518057 (CN); HE, Minjie, Shenzhen, Guangdong 518057 (CN); DING, Fuhao, Shenzhen, Guangdong 518057 (CN)
(74) Representative: Baudler, Ron
(86) International application number: PCT/CN2020/075962
(87) International publication number: WO 2020/119833

(56) References cited:
- EP-A1- 3 934 296
- WO-A1-2019/072022
- CN-A- 107 950 056
- CN-A- 107 950 056
- CN-A- 109 314 942
- CN-A- 109 314 942
- CN-A- 110 191 458
- US-A1- 2013 258 949
- CHINA MOBILE: "Discussion of SA Only Network Support Roaming Users from NSA Network", vol. SA WG2, no. Xi'an, China; 20190408 - 20190412, 2 April 2019 (2019-04-02), XP051719986, Retrieved from the Internet <URL:http://www.3gpp.org/ftp/tsg%5Fsa/WG2%5FArch/TSGS2%5F132%5FXiAn/Docs/S2%2D1903848%2Ezip> [retrieved on 20190402]

## Description

### Field of the Invention

The present disclosure relates to, but is not limited to, the field of communications.

### Background of the Invention

The 5^{th} Generation (5G) mobile communication network is introduced into the 3^{rd} Generation Partnership Project (3GPP). 5G network deployment of telecom operators is divided into two manners, i.e., a non-standalone (NSA) deployment manner and a standalone (SA) deployment manner. With the continuous acceleration of the process of the 5G network deployment, a network of a telecom operator which adopts the NSA deployment manner faces a problem of roaming in and intercommunication with a network of a telecom operator which adopts the SA deployment manner.

A user of the telecom operator under the SA deployment manner can roam and register normally in a 5G network under the NSA deployment manner via a dual-mode terminal with a 5G capability. However, a user of a 5G network under the NSA deployment manner, when roaming to a 5G network under the SA deployment manner, can only use a 4G network and is unable to use the 5G network.

Therefore, researching on a more effective solution of network roaming and intercommunication between the 5G network under the NSA deployment manner and the 5G network under the SA deployment manner for a user, so as to solve a problem arising when a user of a 5G terminal roams in 5G networks under the two deployment manners, i.e., the NSA deployment manner and the SA deployment manner, is beneficial for providing the user with better experience of a roaming service.

CHINA MOBILE : discussion of SA Only Network Support Roaming Users from NAS Network (3GPP DRAFT; S2-1903848, vol. SA WG2, no. Xi'an China;20190408-20190412 April 2019(2019-04-02),XP051719986) discussed that when a user roams from the NSA network as an HPLMN, IWF between MAP based and Diameter based interfaces are required to enable the user deployed in an NSA to roam in an SA network.

WO 2019/072022 A1 discussed the same.

### Summary of the Invention

The invention is defined by the appended claims.

### Brief Description of the Drawings

The accompanying drawings are used to provide further understanding of technical solutions of embodiments of the present disclosure and constitute one part of the description. The drawings are used for interpreting the technical solutions of embodiments of the present disclosure together with the embodiments of the present disclosure, not for limiting the technical solutions of embodiments of the present disclosure. In the drawings:
Fig. 1 is a schematic diagram of a service-based 5G network architecture in related technologies of 3GPP;
Fig. 2(a) is a first schematic diagram of an NSA 5G deployment manner for a 5G network architecture in related technologies;
Fig. 2(b) is a second schematic diagram of the NSA 5G deployment manner for a 5G network architecture in related technologies;
Fig. 3 is a schematic diagram of an SA 5G deployment manner for a 5G network architecture in related technologies;
Fig. 4(a) is schematic diagram showing deployment of a roaming and intercommunication apparatus between a 5G network under an NSA deployment manner and a 5G network under an SA deployment manner so as to realize roaming registration;
Fig. 4(b) is schematic diagram showing deployment of a roaming and intercommunication apparatus between a 5G network under an NSA deployment manner and a 5G network under an SA deployment manner so as to realize a roaming data service;
Fig. 5 is a schematic diagram of a network roaming and intercommunication method provided in an embodiment of the present disclosure;
Fig. 6 is a schematic diagram of a network roaming and intercommunication method provided in another embodiment of the present disclosure;
Fig. 7 is a schematic diagram of a network roaming and intercommunication method provided in another embodiment of the present disclosure;
Fig. 8 is a registration flowchart when a user of an operator of a 5G network under a home NSA deployment manner roams to a 5G network under an SA deployment manner provided in an embodiment of the present disclosure;
Fig. 9 is a data service flowchart when a user of an operator of a 5G network under a home NSA deployment manner roams to a 5G network under an SA deployment manner provided in an embodiment of the present disclosure;
Fig. 10 is a schematic diagram of a structure of a network roaming and intercommunication device provided in another embodiment of the present disclosure;
Fig. 11 is a schematic diagram of a structure of a network roaming and intercommunication device provided in another embodiment of the present disclosure;
Fig. 12 is a schematic diagram of a structure of a network roaming and intercommunication device provided in another embodiment of the present disclosure; and
Fig. 13 is a schematic diagram of a structure of a network roaming and intercommunication system provided in another embodiment of the present disclosure.

### Detailed Description of the Embodiments

Embodiments of the present disclosure will be described below with reference to the drawings. It should be noted that, as long as there is no conflict, the embodiments in the present disclosure and the features in the embodiments may be combined with one another in any manner.

Steps illustrated in the flowcharts of the drawings may be executed in, for example, a computer system with a set of computer executable instructions. Moreover, although logical orders are illustrated in the flowcharts, in some cases, the steps illustrated or described may be executed in orders different from the orders described herein.

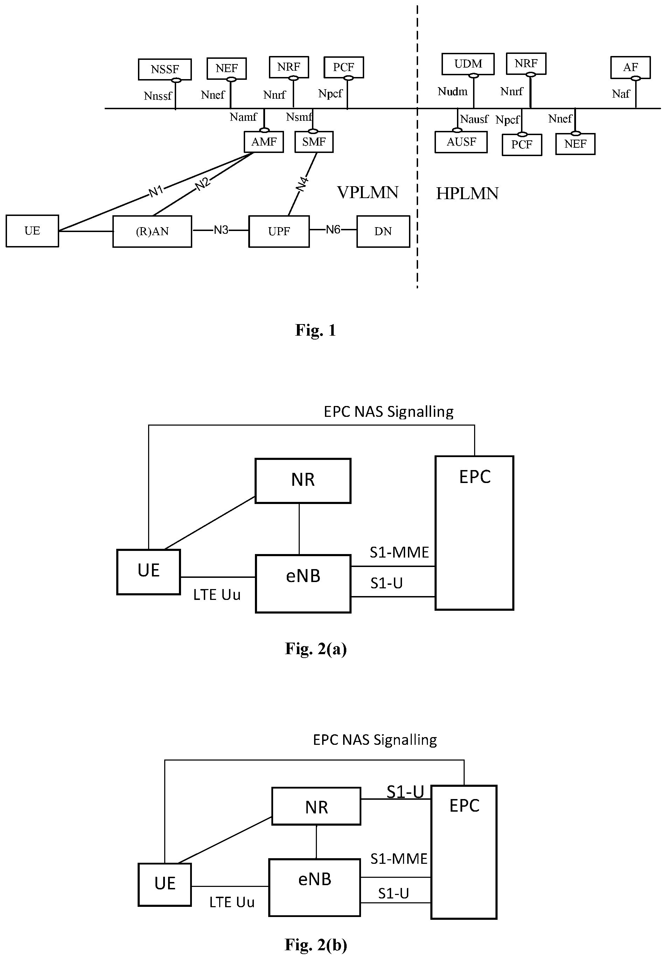

At present, a 5G network architecture based on a service interface provided by 3GPP is shown in Fig. 1. The 5G network architecture includes a visited public land mobile network (VPLMN) and a home public land mobile network (HPLMN).

The VPLMN includes the following network functions (NF): a network slice selection function (NSSF), a network exposure function (NEF), a network repository function (NRF), a policy control function (PCF), an access and mobility management function (AMF), a session management function (SMF), a (radio) access network ((R)AN), a user plane function (UPF), a data network (DN), and user equipment (UE).

The NSSF provides a service to the AMF via an Nnssf interface; the NEF provides a service to an AF and the SMF via an Nnef interface; the NRF provides a service to the AMF, the SMF, the UDM, an AUSF, the NEF, the PCF, the NSSF, and the UPF via an Nnrf interface; the PCF provides a service to the AMF, the NEF, the SMF, and the AF via an Npcf interface; the AMF provides a service to the SMF, the PCF, a UDM, and the NEF via an Namf interface; the SMF provides a service to the AMF, other SMF, the NEF, and the AF via an Nsmf interface; the AMF is connected to the UE via an N1 interface; the AMF is connected to the (R)AN via an N2 interface; the SMF is connected to the UPF via an N4 interface; the (R)AN is connected to the UPF via an N3 interface; and the UPF is connected to the DN via an N6 interface.

The AMF is responsible for security management, mobility management, and connection management of a user. The SMF supports establishment, modification and release of 3GPP and Non-3GPP sessions, is responsible for distribution and management of an internet protocol (IP) address of the UE, and implements and terminates a unified control strategy.

The HPLMN includes: a unified data management (UDM), an NRF, an application function (AF), an authentication server function (AUSF), a PCF, and an NEF.

The UDM provides a service to the AMF, the SMF, the NEF, and the AUSF via an Nudm interface; the NRF provides a service to the AMF, the SMF, the UDM, the AUSF, the NEF, the PCF, the NSSF, the UPF via an Nnrf interface; the AF is connected to the NEF via an Naf interface; the AUSF provides a service to the AMF via an Nausf interface; the PCF provides a service to the AMF, the NEF, the SMF, and the AF via an Npcf; and the NEF provides a service to the SMF and the AF via an Nnef interface.

The AUSF provides unified authentication for 3GPP and Non-3GPP access, i.e., security authentication of a user. The UDM provides a user subscription data management function and a mobility management function.

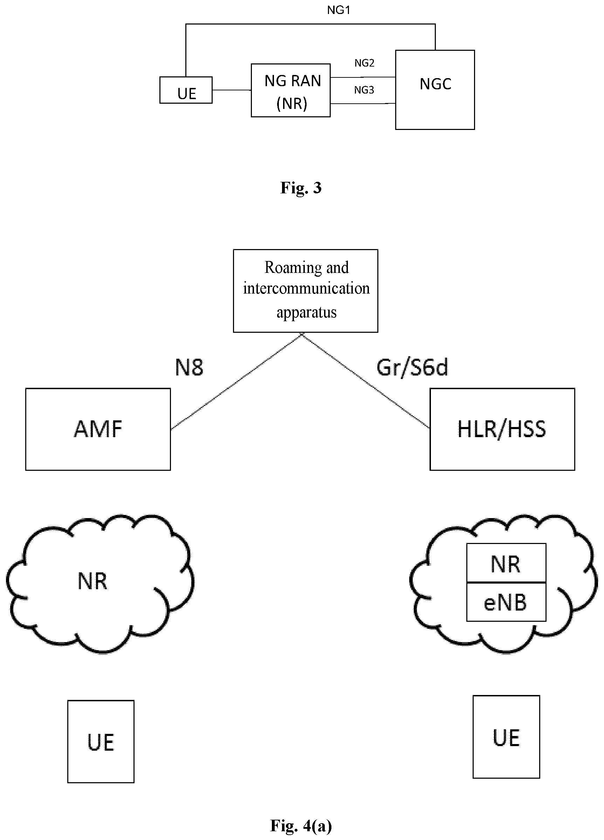

5G network deployment of telecom operators is divided into two manners, i.e., a non-standalone (NSA) deployment manner and a standalone (SA) deployment manner. The NSA deployment manner is shown in Fig. 2 (a) and Fig. 2 (b), and the SA deployment manner is shown in Fig. 3.

For an operator which selects the NSA deployment manner to provide a 5G service, the telecom operator provides a 5G high-speed data service to a user through a 4G core network (i.e., an evolved packet core (EPC) network), a new radio (NR), and an evolved NodeB (eNB). Security authentication and subscription data of the user are provided by a home location register (HLR) or a home subscriber server (HSS) of the 4G core network.

For an operator which selects the SA deployment manner to provide a 5G service, the operator provides a 5G service to a user through a deployed 5G core network (i.e., a next generation core (NGC) network and a next generation radio access network (NG RAN)). Security authentication of a user is provided by an AUSF apparatus of the 5G core network, and subscription data of the user is provided by a UDM apparatus of the 5G core network.

With the continuous acceleration of the process of the 5G network deployment, a network of a telecom operator which adopts the NSA deployment manner faces a problem of roaming in and intercommunication with a network of a telecom operator which adopts the SA deployment manner.

A user of the telecom operator under the SA deployment manner can roam and register normally in a 5G network under the NSA deployment manner via a dual-mode terminal with a 5G capability. However, when a user of the telecom operator under the NSA deployment manner roams and registers in a 5G network under the SA deployment manner via a dual-mode terminal with a 5G capability, since invoking an authentication service of the AUSF and a registration service of the UDM through a hyper text transport protocol (HTTP) for a service-based interface of the 5G network cannot be realized, when a user of a 5G network under the NSA deployment manner roams to a 5G network under the SA deployment manner, the user can only use a 4G network and is unable to use the 5G network.

Therefore, researching on a more effective solution of network roaming and intercommunication between the 5G network under the NSA deployment manner and the 5G network under the SA deployment manner for a user, so as to solve a problem arising when a user of a 5G terminal roams in 5G networks under the two deployment manners, i.e., the NSA deployment manner and the SA deployment manner, is beneficial for providing the user with better experience of a roaming service.

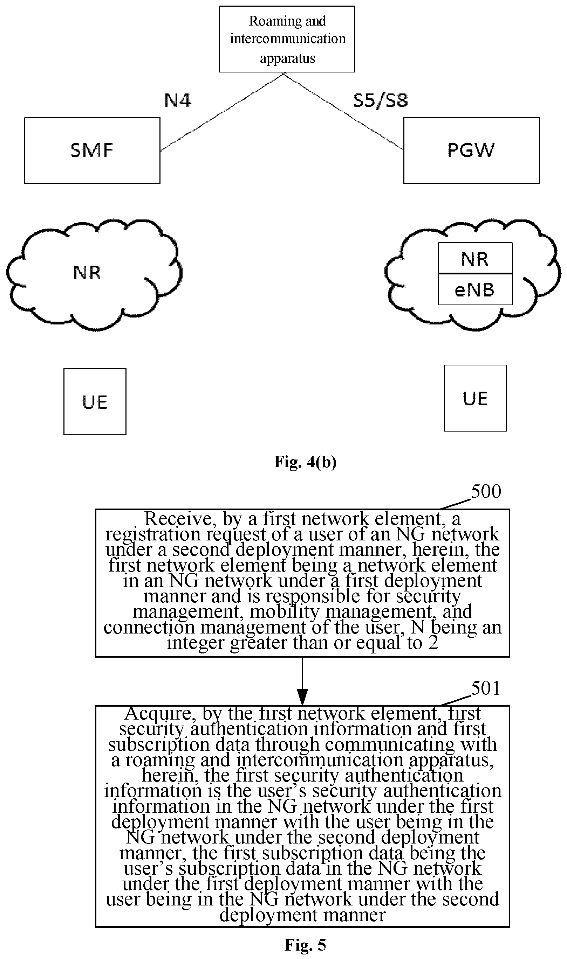

As shown in Fig. 4 (a) and Fig. 4 (b), a roaming and intercommunication apparatus is deployed between networks which are of the same generation and under different deployment manners, so as to realize network roaming and intercommunication between networks which are of the same generation and under different deployment manners for a user through the roaming and intercommunication apparatus. It is certain that the roaming and intercommunication apparatus may also be deployed in a network under one of the deployment manners.

Referring to Fig. 5, an embodiment of the present disclosure provides a network roaming and intercommunication method, which may include step 500 and step 501.

At step 500, a first network element receives a registration request of a user of an NG network which is under a second deployment manner. Herein, the first network element is a network element in an NG network under a first deployment manner and is responsible for security management, mobility management, and connection management of the user, and N is an integer greater than or equal to 2.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; and the first network element may be an AMF. That is, a user of a 5G network under the NSA deployment manner roams to a 5G network under the SA deployment manner.

Alternatively, the first deployment manner may be the NSA deployment manner; the second deployment manner may be the SA deployment manner; and the first network element may be an HLR or HSS. That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

At step 501, the first network element acquires first security authentication information and first subscription data through communicating with a roaming and intercommunication apparatus. Herein, the first security authentication information is the user's security authentication information in the NG network under the first deployment manner, the user being in the NG network under the second deployment manner, and the first subscription data is the user's subscription data in the NG network under the first deployment manner, the user being in the NG network under the second deployment manner.

In the present embodiment, the step that the first network element acquires first security authentication information through communicating with a roaming and intercommunication apparatus includes the following steps:
the first network element sends a first invoking message to the roaming and intercommunication apparatus; and
the first network element receives a first invoking result from the roaming and intercommunication apparatus, herein, the first invoking result including the first security authentication information.

The first invoking message and the first invoking result may be any invoking message and any invoking result, as long as the invoking message and the invoking result are used for acquiring the first security authentication information. For example, the first invoking message may be an invoking message for an authentication request service (Nausf UEAuthentication), and the first invoking result may be an invoking result for the authentication request service.

In the present embodiment, the step that the first network element acquires first subscription data through communicating with a roaming and intercommunication apparatus includes the following steps:
the first network element sends a second invoking message to the roaming and intercommunication apparatus; and
the first network element receives a second invoking result from the roaming and intercommunication apparatus, herein, the second invoking result including the first subscription data.

The second invoking message and the second invoking result may be any invoking message and any invoking result, as long as the invoking message and the invoking result are used for acquiring the first subscription data. For example, the second invoking message may be an invoking message for registering and acquiring a user subscription service, and the second invoking result may be an invoking result for registering and acquiring the user subscription service.

In another embodiment of the present disclosure, this method further includes one of the following steps:
the first network element completes the user's security authentication in the NG network under the first deployment manner based on the first security authentication information, the user being in the NG network under the second deployment manner, and completes the user's registration in the NG network under the first deployment manner based on the first subscription data, the user being in the NG network under the second deployment manner; and
the first network element returns a registration response to the user being in the NG network under the second deployment manner.

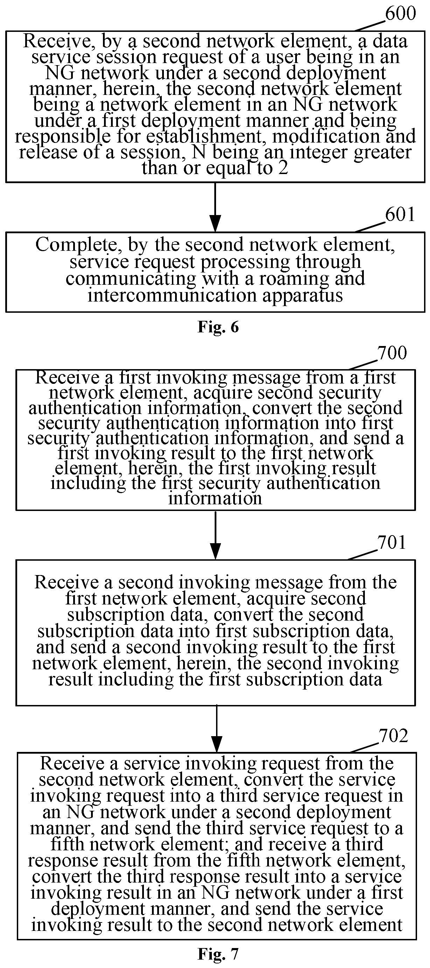

Referring to Fig. 6, another embodiment of the present disclosure provides a network roaming and intercommunication method, which may include step 600 and step 601.

At step 600, a second network element receives a data service session request of a user being in an NG network which is under a second deployment manner. Herein, the second network element is a network element in an NG network under a first deployment manner and is responsible for establishment, modification and release of a session, and N is an integer greater than or equal to 2.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; and the second network element may be an SMF. That is, a user of a 5G network under the NSA deployment manner roams to a 5G network under the SA deployment manner.

Alternatively, the first deployment manner may be the NSA deployment manner; the second deployment manner may be the SA deployment manner; and the second network element may be a public data network (PDN) gateway (PGW). That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

At step 601, the second network element completes service request processing through communicating with a roaming and intercommunication apparatus.

In the present embodiment, the step that the second network element completes service request processing through communicating with a roaming and intercommunication apparatus comprises the following steps:
the second network element sends a service invoking request to the roaming and intercommunication apparatus; and
the second network element receives a service invoking result from the roaming and intercommunication apparatus.

Referring to Fig. 7, another embodiment of the present disclosure provides a network roaming and intercommunication method, which includes one of the following steps: step 700, step 701, and step 702.

At step 700, a first invoking message from a first network element is received; second security authentication information is acquired; the second security authentication information is converted into first security authentication information; and a first invoking result is sent to the first network element, herein, the first invoking result including the first security authentication information.

In the present embodiment, the step that second security authentication information is acquired includes the following steps:
the first invoking message is converted into a first service request in an NG network under a second deployment manner, and the first service request is sent to a third network element; and a first response result from the third network element is received, herein, the first response result including the second security authentication information, and
the third network element being a network element in the NG network under the second deployment manner and is used for providing security authentication for a user.

In the present embodiment, the step that the first invoking message is converted into a first service request means performing a modification to a message name and mapping of parameters.

In the present embodiment, the first invoking message and the first invoking result may be any invoking message and any invoking result, as long as the invoking message and the invoking result are used for acquiring the first security authentication information. For example, the first invoking message may be an invoking message for an authentication request service (Nausf UEAuthentication); the first service request may be a request for an authentication service (for example, MAP (mobile application part) SEND AUTHENTICATION INFO REQUEST) or DIAMETER Authentication-Information-Request); the first response result may be an authentication service response (for example, MAP SEND AUTHENTICATION INFO RESPONSE or DIAMETER Authentication-Information-Answer); and the first invoking result may be an invoking result for the authentication request service.

In the present embodiment, the third network element receives the first service request, sets a separation bit of an authentication management field (AMF) as "1", performs a calculation to generate authentication vector quintuplets {a random challenge (RAND), an expected response (XRES), an integrity key (IK), a cipher key (CK), and an authentication token (AUTN)}, returns a first response result to the roaming and intercommunication apparatus, the first response result carrying the authentication vector quintuplets, i.e., the above second security authentication information.

The second security authentication information in the first response result is converted into the first security authentication information. For example, a calculation is performed based on the authentication vector quintuplets to generate 5G home environment authentication vectors (5G HE AVs), the 5G HE AVs include (a RAND, an AUTN, an XRES*, and a Kausf); and a calculation is further performed based on the 5G HE AVs to generate 5G authentication vectors (5G AVs), the 5G AVs including (a RAND, an HXRES*, an AUTN, and a Kseaf). The above first security authentication information includes the 5G AVs.

The XRES* is generated by performing a calculation using a key driver function (KDF) based on a serving network name and the RAND, the CK, the IK, and the XRES in the authentication vector quintuplets, and the Kausf is generated by performing a calculation using the key driver function based on the serving network name and a sequence number (SQN) included in the AUTN of the authentication vector quintuplets.

The HXRES* is generated by performing a calculation using a SHA-256 hash algorithm based on the XRES* and the RAND, and the Kseaf is generated by performing a calculation using the key driver function based on the serving network name and the Kausf.

In another embodiment of the present disclosure, the third network element receives the first service request, sets a separation bit of an authentication management field (AMF) as "1", performs a calculation to generate 5G HE AVs, and returns a first response result to the roaming and intercommunication apparatus, the first response result carrying the 5G HE AVs, i.e., the above second security authentication information.

The step that a calculation is performed to generate 5G HE AVs includes the following steps:
a calculation is performed to generate authentication vector quintuplets {a random challenge (RAND), an expected response (XRES), an integrity key (IK), a cipher key (CK), and an authentication token (AUTN)}; and a calculation is performed based on the authentication vector quintuplets to generate 5G home environment authentication vectors (5G HE AVs), the 5G HE AVs include (a RAND, an AUTN, an XRES*, and a Kausf).

The second security authentication information in the first response result is converted into the first security authentication information. For example, a calculation is further performed based on the 5G HE AVs to generate 5G authentication vectors (5G AVs), the 5G AVs including (a RAND, an HXRES*, an AUTN, and a Kseaf). The above first security authentication information includes the 5G AVs.

At step 701, a second invoking message from the first network element is received; second subscription data is acquired; the second subscription data is converted into first subscription data; and a second invoking result is sent to the first network element, herein, the second invoking result including the first subscription data.

In the present embodiment, the step that second subscription data is acquired includes the following steps:
the second invoking message is converted into a second service request in the NG network under the second deployment manner, and the second service request is sent to a fourth network element; a second response result from the fourth network element is received, herein, the second response result including the second subscription data,
herein, the fourth network element being a network element in the NG network under the second deployment manner and being used for providing subscription data.

In the present embodiment, the step that the second invoking message is converted into a second service request means performing a modification to a message name and mapping of parameters.

In the present embodiment, the second invoking message and the second invoking result may be any invoking message and any invoking result, as long as the invoking message and the invoking result are used for acquiring the first subscription data. For example, the second invoking message may be an invoking message for registering and acquiring a user subscription service, and the second invoking result may be an invoking result for registering and acquiring the user subscription service. The second service request may be MAP_REQUEST, and the second response result may be MAP_UPDATE_LOCATION_ACK.

In the present embodiment, when the second subscription data in the second response result is converted into the first subscription data, in a case that the second subscription data has a field (for example, user number, network access point name, charging characteristic and so on) which has the same meaning with a field in the first subscription data, a value of the corresponding field in the second subscription data is mapped to the same field in the first subscription data; and when the first subscription data has fields that are not present in the second subscription data and thus mapping cannot be performed, values of these fields can be determined according to a default subscription template.

At step 702, a service invoking request from the second network element is received; the service invoking request is converted into a third service request in the NG network under the second deployment manner; and the third service request is sent to a fifth network element. A third response result from the fifth network element is received; the third response result is converted into a service invoking result in an NG network under a first deployment manner; and the service invoking result is sent to the second network element.

In the present embodiment, the step that the service invoking request is converted into a third service request means performing a modification to a message name and mapping of parameters, and the step that the third response result is converted into a service invoking result means performing a modification to a message name and mapping of parameters.

In the present embodiment, the third service request may be a session establishment request, and the third response result may be a session establishment response.

In the present embodiment, the first network element is a network element in the NG network under the first deployment manner and is responsible for security management, mobility management, and connection management of the user; the second network element is a network element in the NG network under the first deployment manner and is responsible for establishment, modification and release of a session; the fifth network element is a network element in the NG network under the second deployment manner and is used for providing a data service; and N is an integer greater than or equal to 2.

In the present embodiment, the second security authentication information is the user's security authentication information in the NG network under the second deployment manner, the user being in the NG network under the second deployment manner; or the second security authentication information is the user's information in the NG network under the first deployment manner used for generating the first security authentication information, the user being in the NG network under the second deployment manner. The first security authentication information is the user's security authentication information in the NG network under the first deployment manner, the user being in the NG network under the second deployment manner. The first subscription data is the user's subscription data in the NG network under the first deployment manner, the user being in the NG network under the second deployment manner. The second subscription data is the user's subscription data in the NG network under the second deployment manner, the user being in the NG network under the second deployment manner.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; the first network element may be an AMF; the second network element may be an SMF; the third network element may be an HLR/HSS; and the fourth network element may be a PGW. That is, a user of a 5G network under the NSA deployment manner roams to a 5G network under the SA deployment manner.

Alternatively, the first deployment manner may be the NSA deployment manner; the second deployment manner may be the SA deployment manner; the first network element may be an HLR/HSS; the second network element may be a PGW; the third network element may be an AUSF; and the fourth network element may be a UDM. That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

In the present embodiment, the first service request may be an authentication service request. It is certain that, other service request names are not excluded, as long as the service request is used for acquiring the second security authentication information.

The present embodiment realizes network roaming and intercommunication between networks which are of the same generation and under different deployment manners for a user through a roaming and intercommunication apparatus, so that a user's experience of a roaming service can be improved. For example, when a user of an operator of a 5G network under a home NSA deployment manner roams to a 5G network under an SA deployment manner, access registration in the 5G network under the SA deployment manner can be completed through the roaming and intercommunication apparatus to normally access the 5G network and use a data service, so that an operator of the 5G network under the SA deployment manner can realize 5G roaming of a user without the need to additionally support the NSA deployment manner.

Another embodiment of the present disclosure provides a network roaming and intercommunication method, which includes the following steps.

A first service request is received; second security authentication information is generated by performing a calculation; and a first response result is sent. Herein, the first response result includes the second security authentication information.

Alternatively, a second service request is received, and second subscription data is acquired; and a second response result is sent. Herein, the second response result includes second subscription data.

Alternatively, a third service request is received; service processing is performed; and a third response result is sent.

In the present embodiment, the step that second security authentication information is generated by performing a calculation is the same as that in the foregoing embodiments, and is not repeated herein.

The specific implementation process of the present embodiment in various application scenarios is described below.

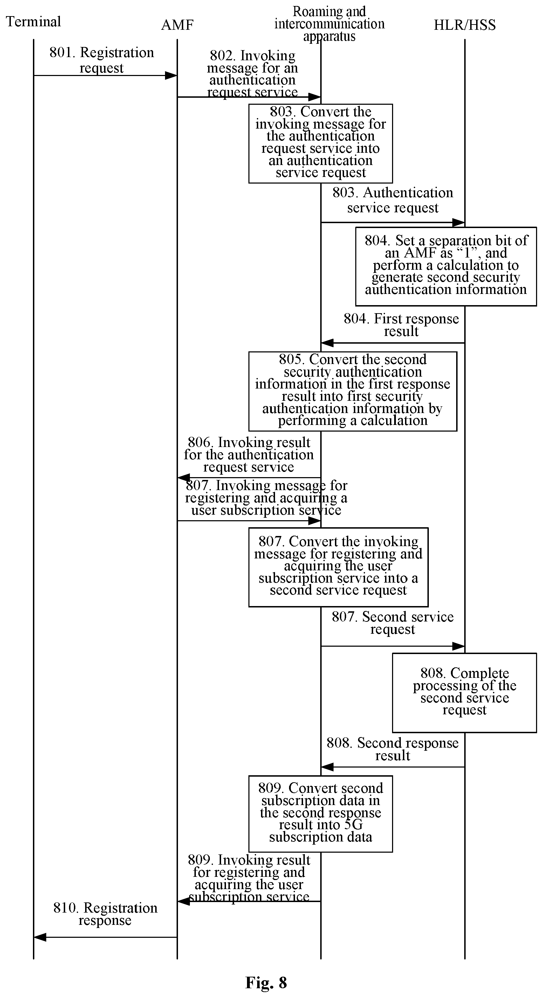

Fig. 8 is a registration flowchart when a user of an operator of a 5G network under a home NSA deployment manner roams to a 5G network under an SA deployment manner provided in an embodiment of the present disclosure. This process may include step 801 to step 810.

At step 801, a terminal under an NSA deployment manner initiates registration in a 5G network under an SA deployment manner. That is, the terminal sends a registration request to an AMF.

At step 802, the AMF sends an invoking message for an authentication request service to a roaming and intercommunication apparatus.

At step 803, the roaming and intercommunication apparatus receives the invoking message for the authentication request service from the AMF, and converts the invoking message for the authentication request service into an authentication service request in the 5G network which is under the NSA deployment manner, and sends the authentication service request to an HLR/HSS in the 5G network under the NSA deployment manner.

At step 804, the HLR/HSS in the 5G network under the NSA deployment manner receives the authentication service request, sets a separation bit of the AMF as "1", performs a calculation to generate second security authentication information, and returns a first response result to the roaming and intercommunication apparatus.

In this step, the first response result includes the second security authentication information. The second security authentication information is the terminal's security authentication information in the 5G network under the SA deployment manner, or is the terminal's information in the 5G network under the NSA deployment manner used for generating first security authentication information.

For example, the second security authentication information is authentication vector quintuplets {a RAND, an XRES, an IK, a CK, and an AUTN} or 5G HE AVs, the 5G HE AVs including (a RAND, an AUTN, an XRES*, and a Kausf).

At step 805, the roaming and intercommunication apparatus converts the second security authentication information in the first response result from the HLR/HSS into first security authentication information by performing a calculation. Herein, the first security authentication information is the terminal's security authentication information in the 5G network under the SA deployment manner.

When the second security authentication information is the authentication vector quintuplets {a RAND, an XRES, an IK, a CK, and an AUTN}, a calculation is performed based on the authentication vector quintuplets to generate 5G HE AVs, and a calculation is further performed based on the 5G HE AVs to generate 5G AVs.

When the second security authentication information is 5G HE AVs, a calculation is further performed based on the 5G HE AVs to generate 5G AVs.

At step 806, the roaming and intercommunication apparatus returns an invoking result for the authentication request service to the AMF.

In the present embodiment, the invoking result for the authentication request service includes the first security authentication information. For example, the first security authentication information is 5G HE AVs and 5G AVs.

Since the process is known to those skilled in the art, the subsequent safety authentication process by the AMF is not described in the present embodiment.

At step 807, the roaming and intercommunication apparatus receives an invoking message for registering and acquiring a user subscription service, converts the invoking message for registering and acquiring the user subscription service into a second service request of the HLR/HSS in the 5G network which is under the NSA deployment manner, and sends the second service request to the HLR/HSS.

At step 808, the HLR/HSS completes processing of the second service request, and returns a second response result to the roaming and intercommunication apparatus. Herein, the second response result includes second subscription data.

At step 809, the roaming and intercommunication apparatus converts the second subscription data in the second response result from the HLR/HSS into 5G subscription data (i.e., first subscription data) in the 5G network under the SA deployment manner, and returns an invoking result for registering and acquiring the user subscription service to the AMF. Herein, the invoking result for registering and acquiring the user subscription service includes the 5G subscription data.

At step 810, the AMF returns a registration response to the terminal.

Since the process is known to those skilled in the art, the subsequent process performed by the AMF is not described in the present embodiment.

It can be seen by those skilled in the art who know the basic process of mobile network mobility management that, the process described in the present embodiment differs from a 3GPP standard process only in the roaming and intercommunication apparatus, and there is no need to make any change to existing network apparatuses and tasks of the process.

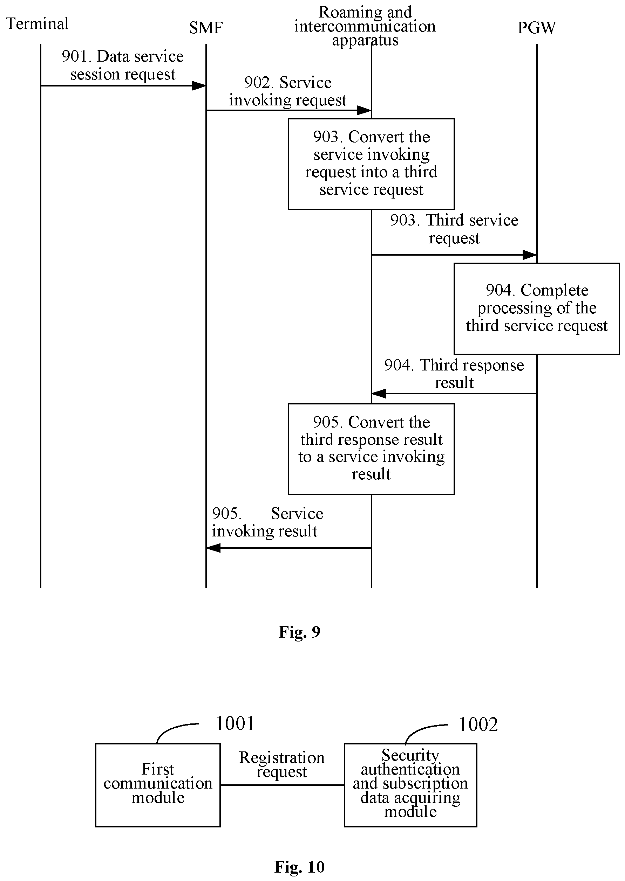

Fig. 9 is a data service flowchart when a user of an operator of a 5G network under a home NSA deployment manner roams to a 5G network under an SA deployment manner provided in an embodiment of the present disclosure.

At step 901, a terminal under an NSA deployment manner initiates a data service session request in a 5G network under an SA deployment manner. That is, the terminal sends a data service session request to an SMF.

At step 902, the SMF initiates a service invoking request to the roaming and intercommunication apparatus.

At step 903, the roaming and intercommunication apparatus receives the service invoking request from the SMF in the 5G network which is under the SA deployment manner, converts the service invoking request into a third service request of a PGW in a 5G network under an NSA deployment manner, and sends the third service request to the PGW.

At step 904, the PGW completes processing of the third service request, and returns a third response result.

At step 905, the roaming and intercommunication apparatus converts the third response result to a service invoking result in the 5G network under the SA deployment manner, and returns the service invoking result to the SMF.

Since the process is known to those skilled in the art, the subsequent process performed by the SMF is not described in the present embodiment.

It can be seen by those skilled in the art who know the basic process of mobile network mobility management that, the process described in the present embodiment differs from a 3GPP standard process only in the roaming and intercommunication apparatus, and there is no need to make any change to existing network apparatuses and tasks of the process.

Referring to Fig. 10, another embodiment of the present disclosure provides a network roaming and intercommunication device (for example, a first network element). The network roaming and intercommunication device includes: a first communication module 1001 and a security authentication and subscription data acquiring module 1002.

The first communication module 1001 is configured to receive a registration request of a user of an NG network which is under a second deployment manner. Herein, the first network element is a network element in an NG network under a first deployment manner and is responsible for security management, mobility management, and connection management of the user, and N is an integer greater than or equal to 2.

The security authentication and subscription data acquiring module 1002 is configured to acquire first security authentication information and first subscription data through communicating with a roaming and intercommunication apparatus. Herein, the first security authentication information is the user's security authentication information in the NG network under the first deployment manner, the user being in the NG network under the second deployment manner, and the first subscription data is the user's subscription data in the NG network under the first deployment manner, the user being in the NG network under the second deployment manner.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; and the second network element may be an AMF. That is, a user of a 5G network under the NSA deployment manner roams to a 5G network under the SA deployment manner.

Alternatively, the first deployment manner may be the NSA deployment manner; the second deployment manner may be the SA deployment manner; and the first network element may be an HLR or HSS. That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

In the present embodiment, the security authentication and subscription data acquiring module 1002 may be configured to use the following manners to realize acquiring the first security authentication information through communicating with a roaming and intercommunication apparatus:
a first invoking message is sent to the roaming and intercommunication apparatus; and a first invoking result from the roaming and intercommunication apparatus is received, herein, the first invoking result including the first security authentication information.

The first invoking message and the first invoking result may be any invoking message and any invoking result, as long as the invoking message and the invoking result are used for acquiring the first security authentication information. For example, the first invoking message may be an invoking message for an authentication request service (Nausf UEAuthentication), and the first invoking result may be an invoking result for the authentication request service.

In the present embodiment, the security authentication and subscription data acquiring module 1002 may be configured to use the following manners to realize acquiring first subscription data through communicating with a roaming and intercommunication apparatus:
a second invoking message is sent to the roaming and intercommunication apparatus; and a second invoking result from the roaming and intercommunication apparatus is received, herein, the second invoking result including the first subscription data.

The second invoking message and the second invoking result may be any invoking message and any invoking result, as long as the invoking message and the invoking result are used for acquiring the first subscription data. For example, the second invoking message may be an invoking message for registering and acquiring a user subscription service, and the second invoking result may be an invoking result for registering and acquiring the user subscription service.

In another embodiment the present disclosure, the security authentication and subscription data acquiring module 1002 may be further configured to:
complete the user's security authentication in the NG network under the first deployment manner based on the first security authentication information, the user being in the NG network under the second deployment manner, and complete the user's registration in the NG network under the first deployment manner based on the first subscription data, the user being in the NG network under the second deployment manner.

The first communication module 1001 may be further configured to: return a registration response to the user being in the NG network under the second deployment manner.

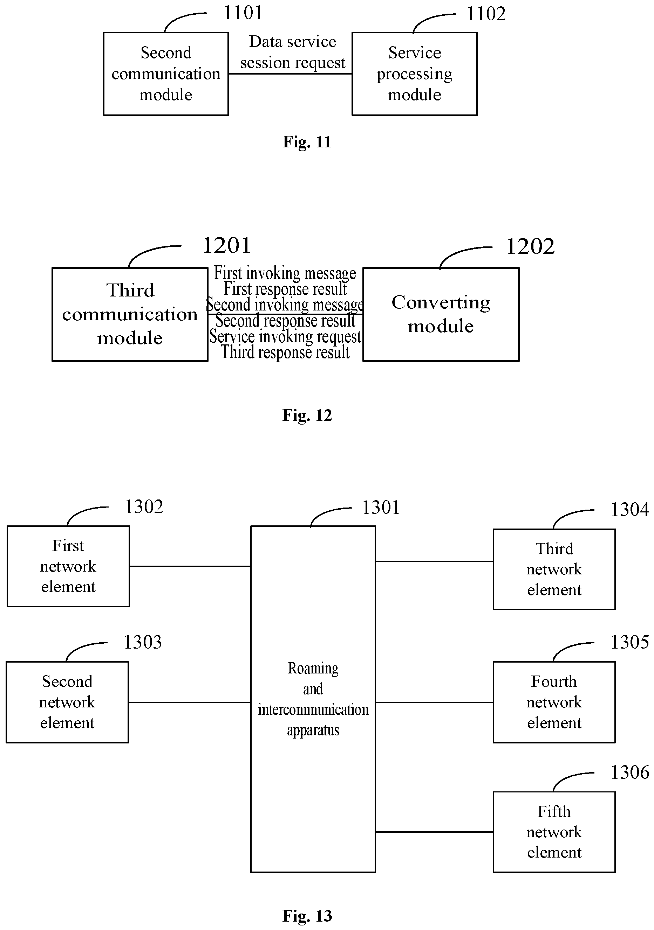

Referring to Fig. 11, another embodiment of the present disclosure provides a network roaming and intercommunication device (for example, a second network element). The network roaming and intercommunication device includes: a second communication module 1101, and a service processing module 1102.

The second communication module 1101 is configured to receive a data service session request of a user being in an NG network which is under a second deployment manner. Herein, the second network element is a network element in an NG network under a first deployment manner and is responsible for establishment, modification and release of a session, and N is an integer greater than or equal to 2.

The service processing module 1102 is configured to complete service request processing through communicating with a roaming and intercommunication apparatus.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; and the second network element may be an SMF. That is, a user of a 5G network under the NSA deployment manner roams to a 5G network under the SA deployment manner.

Alternatively, the first deployment manner may be the NSA deployment manner; the second deployment manner may be the SA deployment manner; and the second network element may be a public data network (PDN) gateway (PGW). That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

In the present embodiment, the service processing module 1102 may be configured to use the following manners to realize completing service request processing through communicating with a roaming and intercommunication apparatus:
a service invoking request is sent to the roaming and intercommunication apparatus; and a service invoking result from the roaming and intercommunication apparatus is received.

Referring to Fig. 12, another embodiment of the present disclosure provides a network roaming and intercommunication device (for example, a roaming and intercommunication apparatus). The network roaming and intercommunication device comprises a third communication module 1201 and a converting module 1202.

The third communication module 1201 is configured to perform one of the following steps of:
receiving a first invoking message from a first network element, and acquiring second security authentication information;
receiving a second invoking message from the first network element, and acquiring second subscription data; and
receiving a service invoking request from a second network element, and sending a third service request to a fifth network element; and receiving a third response result from the fifth network element, and sending a service invoking result to the second network element.

The converting module 1202 is configured to perform one of the following steps of:
converting the second security authentication information into first security authentication information;
converting the second subscription data into first subscription data; and
converting the service invoking request into a third service request in an NG network under a second deployment manner; and converting the third response result into a service invoking result in an NG network under a first deployment manner.

The first network element is a network element in the NG network under the first deployment manner and is responsible for security management, mobility management, and connection management of the user; the second network element is a network element in the NG network under the first deployment manner and is responsible for establishment, modification and release of a session; the third network element is a network element in the NG network under the second deployment manner and is used for providing security authentication for a user; the fourth network element is a network element in the NG network under the second deployment manner and being used for providing subscription data; the fifth network element is a network element in the NG network under the second deployment manner and is used for providing a data service; and N is an integer greater than or equal to 2.

The second security authentication information is the user's security authentication information in the NG network under the second deployment manner, the user being in the NG network under the second deployment manner; or the second security authentication information is the user's information in the NG network under the first deployment manner used for generating the first security authentication information, the user being in the NG network under the second deployment manner. The first security authentication information is the user's security authentication information in the NG network under the first deployment manner, the user being in the NG network under the second deployment manner. The first subscription data is the user's subscription data in the NG network under the first deployment manner, the user being in the NG network under the second deployment manner. The second subscription data is the user's subscription data in the NG network under the second deployment manner, the user being in the NG network under the second deployment manner.

The user in the present embodiment may be any kind of terminal, and may be at least one of the following terminals: an LTE/NR multiple mode multiple standby terminal, and an LTE/NR multiple mode single standby terminal.

For example, when N is 5, the first deployment manner may be the SA deployment manner; the second deployment manner may be the NSA deployment manner; the first network element may be an AMF; the second network element may be an SMF; the third network element may be an HLR/HSS; and the fourth network element may be a PGW. That is, a user of a 5G network under the NSA deployment manner roams to a 5G network under the SA deployment manner.

Alternatively, the first deployment manner may be the NSA deployment manner; the second deployment manner may be the SA deployment manner; the first network element may be an HLR/HSS; the second network element may be a PGW; the third network element may be an AUSF; and the fourth network element may be a UDM. That is, a user of a 5G network under the SA deployment manner roams to a 5G network under the NSA deployment manner.

It is certain that the method in the present embodiment may also be used to realize roaming and intercommunication, when different deployment manners are adopted in any one of 4G, 3G, and 2G mobile communication networks or in a higher generation mobile communication network.

In the present embodiment, the third communication module 1201 may be configured to use the following manners to realize acquiring the second security authentication information:
the first invoking message is converted into a first service request in the NG network under the second deployment manner, and the first service request is sent to a third network element; and a first response result from the third network element is received, herein, the first response result including the second security authentication information, and
herein, the third network element being a network element in the NG network under the second deployment manner and is used for providing security authentication for a user.

In the present embodiment, the third communication module 1201 may be configured to use the following manners to realize acquiring the second subscription data:
the second invoking message is converted into a second service request in the NG network under the second deployment manner, and the second service request is sent to a fourth network element; a second response result from the fourth network element is received, herein, the second response result including the second subscription data,
herein, the fourth network element being a network element in the NG network under the second deployment manner and being used for providing subscription data.

In the present embodiment, the first invoking message and the first invoking result may be any invoking message and any invoking result, as long as the invoking message and the invoking result are used for acquiring the first security authentication information. For example, the first invoking message may be an invoking message for an authentication request service (Nausf UEAuthentication); the first service request may be a request for an authentication service (for example, MAP (mobile application part) SEND AUTHENTICATION INFO REQUEST) or DIAMETER Authentication-Information-Request); the first response result may be an authentication service response (for example, MAP SEND AUTHENTICATION INFO RESPONSE or DIAMETER Authentication-Information-Answer); and the first invoking result may be an invoking result for the authentication request service.

In the present embodiment, the third network element receives the first service request, sets a separation bit of an authentication management field (AMF) as "1", performs a calculation to generate authentication vector quintuplets {a random challenge (RAND), an expected response (XRES), an integrity key (IK), a cipher key (CK), and an authentication token (AUTN)}, returns a first response result to the roaming and intercommunication apparatus, the first response result carrying the authentication vector quintuplets, i.e., the above second security authentication information.

The second security authentication information in the first response result is converted into the first security authentication information. For example, a calculation is performed based on the authentication vector quintuplets to generate 5G home environment authentication vectors (5G HE AVs), the 5G HE AVs include (a RAND, an AUTN, an XRES*, and a Kausf); and a calculation is further performed based on the 5G HE AVs to generate 5G authentication vectors (5G AVs), the 5G AVs including (a RAND, an HXRES*, an AUTN, and a Kseaf). The above first security authentication information includes the 5G AVs.

The XRES* is generated by performing a calculation using a key driver function (KDF) based on a serving network name and the RAND, the CK, the IK, and the XRES in the authentication vector quintuplets, and the Kausf is generated by performing a calculation using the key driver function based on the serving network name and a sequence number (SQN) included in the AUTN of the authentication vector quintuplets.

The HXRES* is generated by performing a calculation using a SHA-256 hash algorithm based on the XRES* and the RAND, and the Kseaf is generated by performing a calculation using the key driver function based on the serving network name and the Kausf.

In another embodiment of the present disclosure, the third network element receives the first service request, sets a separation bit of an authentication management field (AMF) as "1", performs a calculation to generate 5G HE AVs, and returns a first response result to the roaming and intercommunication apparatus, the first response result carrying the 5G HE AVs, i.e., the above second security authentication information.

The step that a calculation is performed to generate 5G HE AVs includes the following steps:
a calculation is performed to generate authentication vector quintuplets {a random challenge (RAND), an expected response (XRES), an integrity key (IK), a cipher key (CK), and an authentication token (AUTN)}; and a calculation is performed based on the authentication vector quintuplets to generate 5G home environment authentication vectors (5G HE AVs), the 5G HE AVs include (a RAND, an AUTN, an XRES*, and a Kausf).

The second security authentication information in the first response result is converted into the first security authentication information. For example, a calculation is further performed based on the 5G HE AVs to generate 5G authentication vectors (5G AVs), the 5G AVs including (a RAND, an HXRES*, an AUTN, and a Kseaf). The above first security authentication information includes the 5G AVs.

In the present embodiment, the first service request may be an authentication service request. It is certain that, other service request names are not excluded, as long as the service request is used for acquiring the second security authentication information.

Another embodiment of the present disclosure provides a network roaming and intercommunication device, which includes a fourth communication module.

The fourth communication module is configured to perform the following steps. A first service request is received; second security authentication information is generated by performing a calculation; and a first response result is sent. Herein, the first response result includes the second security authentication information.

Alternatively, a second service request is received, and second subscription data is acquired; and a second response result is sent. Herein, the second response result includes second subscription data.

Alternatively, a third service request is received; service processing is performed; and a third response result is sent.

The specific implementation process of the above network roaming and intercommunication device is the same as the specific implementation process of the network roaming and intercommunication method in the foregoing embodiments, and is not repeated herein.

The present embodiment realizes network roaming and intercommunication between networks which are of the same generation and under different deployment manners for a user through a roaming and intercommunication apparatus, so that a user's experience of a roaming service can be improved. For example, when a user of an operator of a 5G network under a home NSA deployment manner roams to a 5G network under an SA deployment manner, access registration in the 5G network under the SA deployment manner can be completed through the roaming and intercommunication apparatus to normally access the 5G network and use a data service, so that an operator of the 5G network under the SA deployment manner can realize 5G roaming of a user without the need to additionally support the NSA deployment manner.

Another embodiment of the present disclosure provides a network roaming and intercommunication device, which includes a processor and a computer readable storage medium. The computer readable storage medium stores instructions, and the instructions, when executed by the processor, implement any of network roaming and intercommunication methods described herein.

Another embodiment of the present disclosure provides a computer readable storage medium, on which computer programs are stored. The computer programs, when executed by the processor, implement steps of any of network roaming and intercommunication methods described herein.

Referring to Fig. 13, another embodiment of the present disclosure provides a network roaming and intercommunication system, which includes: a roaming and intercommunication apparatus 1301, and at least one of a first network element 1302 and a second network element 1303.

The first network element 1302 is configured to receive a registration request of a user in an NG network which is under a second deployment manner. Herein, the first network element is a network element in an NG network under a first deployment manner and is responsible for security management, mobility management, and connection management of a user. N is an integer greater than or equal to 2. The first network element acquires first security authentication information and first subscription data through communicating with the roaming and intercommunication apparatus. Herein, the first security authentication information is the user's security authentication information in the NG network under the first deployment manner, the user being in the NG network under the second deployment manner, and the first subscription data is the user's subscription data in the NG network under the first deployment manner, the user being in the NG network under the second deployment manner.

The second network element 1303 is configured to receive a data service session request of the user being in the NG network which is under the second deployment manner. Herein, the second network element is a network element in the NG network under the first deployment manner and is responsible for establishment, modification and release of a session, and N is an integer greater than or equal to 2. The second network element completes service request processing through communicating with the roaming and intercommunication apparatus.

In the present embodiment, the first network element 1302 may be configured to use the following manners to realize acquiring first security authentication information through communicating with the roaming and intercommunication apparatus:
a first invoking message is sent to the roaming and intercommunication apparatus; and a first invoking result from the roaming and intercommunication apparatus is received, herein, the first invoking result including the first security authentication information.

The first network element 1302 may be configured to use the following manners to realize acquiring first subscription data through communicating with the roaming and intercommunication apparatus:
a second invoking message is sent to the roaming and intercommunication apparatus; and a second invoking result from the roaming and intercommunication apparatus is received, herein, the second invoking result including the first subscription data.

The second network element 1303 may be configured to use the following manners to realize completing service request processing through communicating with the roaming and intercommunication apparatus:
a service invoking request is sent to the roaming and intercommunication apparatus; and a service invoking result from the roaming and intercommunication apparatus is received.

The roaming and intercommunication apparatus 1301 may be configured to perform at least one of groups of steps.

A first invoking message from a first network element is received; second security authentication information is acquired; the second security authentication information is converted into first security authentication information; and a first invoking result is sent to the first network element, herein, the first invoking result including the first security authentication information.

A second invoking message from the first network element is received; second subscription data is acquired; the second subscription data is converted into first subscription data; and a second invoking result is sent to the first network element, herein, the second invoking result including the first subscription data.

A service invoking request from the second network element is received; the service invoking request is converted into a third service request in the NG network under the second deployment manner; and the third service request is sent to a fifth network element. A third response result from the fifth network element is received; the third response result is converted into a service invoking result in the NG network under the first deployment manner; and the service invoking result is sent to the second network element.

The fifth network element is a network element in the NG network under the second deployment manner and is used for providing a data service; and N is an integer greater than or equal to 2.

In the present embodiment, the roaming and intercommunication apparatus 1301 may be configured to use the following manners to realize acquiring the second security authentication information:
the first invoking message is converted into a first service request in the NG network under the second deployment manner, and the first service request is sent to a third network element; and a first response result from the third network element is received, herein, the first response result including the second security authentication information, and
herein, the third network element being a network element in the NG network under the second deployment manner and is used for providing security authentication for a user.

In the present embodiment, the roaming and intercommunication apparatus 1301 may be configured to use the following manners to realize acquiring the second subscription data:
the second invoking message is converted into a second service request in the NG network under the second deployment manner, and the second service request is sent to a fourth network element; a second response result from the fourth network element is received, herein, the second response result including the second subscription data,
herein, the fourth network element being a network element in the NG network under the second deployment manner and being used for providing subscription data.

In another embodiment of the present disclosure, the network roaming and intercommunication system further includes one of a third network element 1304, a fourth network element 1305, and a fifth network element 1306.

Herein, the third network element 1304 is configured to receive a first service request from the roaming and intercommunication apparatus 1301, completes processing of the first service request, and returns a first response result to the roaming and intercommunication apparatus 1301, herein, the first response result including second security authentication information.

The fourth network element 1305 is configured to receive a second service request from the roaming and intercommunication apparatus 1301, completes processing of the second service request, and returns a second response result to the roaming and intercommunication apparatus 1301, herein, the second response result including second subscription data.

The fifth network element 1306 is configured to receive a third service request from the roaming and intercommunication apparatus 1301, completes processing of the third service request, and returns a third response result to the roaming and intercommunication apparatus 1301.

The specific implementation process of the above network roaming and intercommunication system is the same as the specific implementation process of the network roaming and intercommunication methods in the foregoing embodiments, and is not repeated herein.

Those ordinary skilled in the art may appreciate that functional modules/units in all or some steps in the method, the system, and the device disclosed above may be implemented as software, firmware, hardware, and suitable combinations thereof. In a hardware implementation, division of the functional modules/units mentioned in the above description does not necessarily correspond to division of physical components. For example, one physical component may have multiple functions, or one function or step may be executed by cooperation of several physical components. Some or all of the components may be implemented as software executed by a processor, such as a digital signal processor or a microprocessor, or as hardware, or as an integrated circuit, such as a special integrated circuit. Such software may be distributed on a computer readable medium. The computer readable medium may include a computer storage medium (or non-transitory medium) and a communication medium (or transitory medium). As is well known to those ordinary skilled in the art, the term computer storage medium includes volatile and nonvolatile, removable and non-removable mediums implemented in any method or technology for storing information (such as a computer readable instruction, a data structure, a program module or other data). The computer storage medium includes, but is not limited to: RAM, ROM, EEPROM, flash memory or other memory technologies; CD-ROM, digital versatile disc (DVD) or other optical disc storage; magnetic cassette, magnetic tape, magnetic disk storage or other magnetic storage devices; or any other medium that may be used to store desired information and may be accessed by the computer. Moreover, it is well known to those skilled in the art that the communication medium typically includes a computer readable instruction, a data structure, a program module, or other data in a modulated data signal, such as a carrier wave or other transport mechanisms, and may include any information delivery medium.

Although implementation manners disclosed in embodiments of the present disclosure are as above, the above contents are implementation manners used only for better understanding, rather than restricting, the embodiments of the present disclosure. Any person skilled in the art of the embodiments of the present disclosure can make any modification or change to the implementing forms or details without departing from the scope disclosed in the embodiments of the present disclosure. The protection scope of the present disclosure shall be determined by the scope as defined in the claims.

## Claims

1. A network roaming and intercommunication method in a case where a user of a terminal under a second non-standalone, NSA, deployment manner roams from the NSA network to a standalone, SA, network, comprising:
receiving, by a first network element, a registration request of the user of a Next Generation, NG, network under a first SA deployment manner;
sending, by the first network element, a first invoking message and a second invoking message to a roaming and intercommunication apparatus;
receiving, by the roaming and intercommunication apparatus, the first invoking message from the first network element, acquiring second security authentication information, converting the second security authentication information into first security authentication information, and sending a first invoking result to the first network element, wherein the first invoking result comprises the first security authentication information;
receiving, by the roaming and intercommunication apparatus, the second invoking message from the first network element, acquiring second subscription data, converting the second subscription data into first subscription data, and sending a second invoking result to the first network element, wherein the second invoking result comprises the first subscription data; when the second subscription data is converted into the first subscription data, when the second subscription data and the first subscription data have the same meaning fields, a value of a corresponding field in the second subscription data is mapped to the same field in the first subscription data; and when there are fields in the first subscription data that are not in the second subscription data, values of these fields are set according to a default subscription template; and
receiving a service invoking request from a second network element, converting the service invoking request into a third service request in an NG network under a second deployment manner, and sending the third service request to a fifth network element; and receiving a third response result from the fifth network element, converting the third response result into a service invoking result in an NG network under a first deployment manner, and sending the service invoking result to the second network element,
wherein, the first network element is a network element AMF in the NG network under the first deployment manner and is responsible for security management, mobility management, and connection management of a user; the second network element is a network element SMF in the NG network under the first deployment manner and is responsible for establishment, modification and release of a session; the fifth network element is a network element in the NG network under the second deployment manner and is used for providing a data service; and N, in the initialism NG, is an integer greater than or equal to 2; and
wherein, the second security authentication information is the user's security authentication information in the NG network under the second deployment manner, the user being in the NG network under the second deployment manner, or the second security authentication information is the user's information in the NG network under the first deployment manner used for generating the first security authentication information, the user being in the NG network under the second deployment manner; and the first security authentication information is the user's security authentication information in the NG network under the first deployment manner, the user being in the NG network under the second deployment manner; the first subscription data is the user's subscription data in the NG network under the first deployment manner, the user being in the NG network under the second deployment manner; and the second subscription data is the user's subscription data in the NG network under the second deployment manner, the user being in the NG network under the second deployment manner.

2. The method according to claim 1, wherein the step of acquiring second security authentication information comprises steps of:
converting the first invoking message into a first service request in the NG network under the second deployment manner, and sending the first service request to a third network element; and receiving a first response result from the third network element, wherein the first response result comprises the second security authentication information, and wherein the third network element is a network element AUSF in the NG network under the second deployment manner and is used for providing security authentication for the user; and
wherein the step of acquiring second subscription data comprises the following steps of:
converting the second invoking message into a second service request in the NG network under the second deployment manner, and sending the second service request to a fourth network element; and receiving a second response result from the fourth network element, wherein the second response result comprises the second subscription data, and wherein the fourth network element is a network element UDM in the NG network under the second deployment manner and is used for providing subscription data.

3. A computer readable storage medium, on which computer programs are stored, wherein the computer programs, when executed by processors comprised in each one of the entities involved in performing method claims 1 or 2 implement the respective corresponding steps of any of network roaming and intercommunication methods described according to any of claims 1 to 2.

4. A network roaming and intercommunication system, comprising: a roaming and intercommunication apparatus a first network element, a terminal and a second network element, wherein
the terminal, used by a user, under a second non-standalone, NSA, deployment manner is configured to roam from the NSA network to a standalone, SA, network,
the first network element is configured to receive a registration request of a user of a terminal in an Next Generation, NG, network under a second, NSA, deployment manner, wherein the first network element is a network element AMF in an NG network under a first, SA, deployment manner and is responsible for security management, mobility management, and connection management of the user; N is an integer greater than or equal to 2; the first network element acquires first security authentication information and first subscription data through communicating with the roaming and intercommunication apparatus, wherein the first security authentication information is the user's security authentication information in the NG network under the first deployment manner, the user being in the NG network under the second deployment manner, and the first subscription data is the user's subscription data in the NG network under the first deployment manner, the user being in the NG network under the second deployment manner; and
the second network element is configured to receive a data service session request of the user being in the NG network under the second deployment manner, wherein the second network element is a network element SMF in the NG network under the first deployment manner and is responsible for establishment, modification and release of a session; and the second network element completes service request processing through communicating with the roaming and intercommunication apparatus,
wherein the first network element is configured to use the following manners to realize acquiring first security authentication information through communicating with the roaming and intercommunication apparatus:
sending a first invoking message to the roaming and intercommunication apparatus, and receiving a first invoking result from the roaming and intercommunication apparatus, wherein the first invoking result comprises the first security authentication information;
the first network element is configured to use the following manners to realize acquiring first subscription data through communicating with the roaming and intercommunication apparatus:
sending a second invoking message to the roaming and intercommunication apparatus, and receiving a second invoking result from the roaming and intercommunication apparatus, wherein the second invoking result comprises the first subscription data;
the second network element is configured to use the following manners to realize completing service request processing through communicating with the roaming and intercommunication apparatus:
sending a service invoking request to the roaming and intercommunication apparatus, and receiving a service invoking result from the roaming and intercommunication apparatus; and
the roaming and intercommunication apparatus is configured to perform at least one of groups of steps of:
receiving a first invoking message from a first network element, acquiring second security authentication information, converting the second security authentication information into first security authentication information, and sending a first invoking result to the first network element, wherein the first invoking result comprises the first security authentication information;
receiving a second invoking message from the first network element, acquiring second subscription data, converting the second subscription data into first subscription data, and sending a second invoking result to the first network element, wherein the second invoking result comprises the first subscription data; when the second subscription data is converted into the first subscription data, when the second subscription data and the first subscription data have the same meaning fields, a value of a corresponding field in the second subscription data is mapped to the same field in the first subscription data; and when there are fields in the first subscription data that are not in the second subscription data, values of these fields are set according to the default contract template; and
receiving a service invoking request from the second network element, converting the service invoking request into a third service request in the NG network under the second deployment manner, and sending the third service request to a fifth network element; and receiving a third response result from the fifth network element, converting the third response result into a service invoking result in the NG network under the first deployment manner, and sending the service invoking result to the second network element,
wherein the fifth network element is a network element in the NG network under the second deployment manner and is used for providing a data service, and N, in the initialism NG, is an integer greater than or equal to 2.

## Patentansprüche

1. Netzwerk-Roaming- und Interkommunikationsverfahren in einem Fall, in dem ein Benutzer eines Endgeräts unter einer zweiten nicht-eigenständigen, NSA, Verwendungsweise von dem NSA-Netzwerk zu einem eigenständigen, SA, Netzwerk roamt, umfassend:
Empfangen, durch ein erstes Netzwerkelement, einer Registrierungsanforderung des Benutzers eines Next-Generation-, NG, Netzwerks unter einer ersten SA-Verwendungsweise;
Senden, durch das erste Netzwerkelement, einer ersten Aufrufnachricht und einer zweiten Aufrufnachricht an eine Roaming- und Interkommunikationsvorrichtung;
Empfangen, durch die Roaming- und Interkommunikationsvorrichtung, der ersten Aufrufnachricht von dem ersten Netzwerkelement, Erfassen von zweiten Sicherheitsauthentifizierungsinformationen, Umwandeln der zweiten Sicherheitsauthentifizierungsinformationen in erste Sicherheitsauthentifizierungsinformationen und Senden eines ersten Aufrufergebnisses an das erste Netzwerkelement, wobei das erste Aufrufergebnis die ersten Sicherheitsauthentifizierungsinformationen umfasst;
Empfangen, durch die Roaming- und Interkommunikationsvorrichtung, der zweiten Aufrufnachricht von dem ersten Netzwerkelement, Erfassen von zweiten Abonnementdaten, Umwandeln der zweiten Abonnementdaten in erste Abonnementdaten und Senden eines zweiten Aufrufergebnisses an das erste Netzwerkelement, wobei das zweite Aufrufergebnis die ersten Abonnementdaten umfasst; wenn die zweiten Abonnementdaten in die ersten Abonnementdaten umgewandelt werden, wenn die zweiten Abonnementdaten und die ersten Abonnementdaten die gleichen Bedeutungsfelder haben, ein Wert eines entsprechenden Feldes in den zweiten Abonnementdaten auf das gleiche Feld in den ersten Abonnementdaten abgebildet wird; und wenn es Felder in den ersten Abonnementdaten gibt, die nicht in den zweiten Abonnementdaten sind, Werte dieser Felder gemäß einer Standardabonnementvorlage eingestellt werden; und
Empfangen einer Service-Aufrufanforderung von einem zweiten Netzwerkelement, Umwandeln der Service-Aufrufanforderung in eine dritte Service-Anforderung in einem NG-Netzwerk unter einer zweiten Verwendungsweise und Senden der dritten Service-Anforderung an ein fünftes Netzwerkelement; und Empfangen eines dritten Antwortergebnisses von dem fünften Netzwerkelement, Umwandeln des dritten Antwortergebnisses in ein Service-Aufrufergebnis in einem NG-Netzwerk unter einer ersten Verwendungsweise und Senden des Service-Aufrufergebnisses an das zweite Netzwerkelement,
wobei das erste Netzwerkelement ein Netzwerkelement AMF in dem NG-Netzwerk unter der ersten Verwendungsweise ist und für Sicherheitsmanagement, Mobilitätsmanagement und Verbindungsmanagement eines Benutzers verantwortlich ist; das zweite Netzwerkelement ein Netzwerkelement SMF in dem NG-Netzwerk unter der ersten Verwendungsweise ist und für Einrichtung, Anpassung und Freigabe einer Sitzung verantwortlich ist; das fünfte Netzwerkelement ein Netzwerkelement in dem NG-Netzwerk unter der zweiten Verwendungsweise ist und zum Bereitstellen eines Datenservice verwendet wird; und N in dem Ausgangs-NG eine ganze Zahl größer oder gleich 2 ist; und
wobei die zweiten Sicherheitsauthentifizierungsinformationen die Sicherheitsauthentifizierungsinformationen des Benutzers in dem NG-Netzwerk unter der zweiten Verwendungsweise sind, wobei der Benutzer in dem NG-Netzwerk unter der zweiten Verwendungsweise ist, oder die zweiten Sicherheitsauthentifizierungsinformationen die Informationen des Benutzers in dem NG-Netzwerk unter der ersten Verwendungsweise sind, die zum Erzeugen der ersten Sicherheitsauthentifizierungsinformationen verwendet werden, wobei der Benutzer in dem NG-Netzwerk unter der zweiten Verwendungsweise ist; und die ersten Sicherheitsauthentifizierungsinformationen die Sicherheitsauthentifizierungsinformationen des Benutzers in dem NG-Netzwerk unter der ersten Verwendungsweise sind, wobei der Benutzer in dem NG-Netzwerk unter der zweiten Verwendungsweise ist; die ersten Abonnementdaten die Abonnementdaten des Benutzers in dem NG-Netzwerk unter der ersten Verwendungsweise sind, wobei der Benutzer in dem NG-Netzwerk unter der zweiten Verwendungsweise ist; und die zweiten Abonnementdaten die Abonnementdaten des Benutzers in dem NG-Netzwerk unter der zweiten Verwendungsweise sind, wobei der Benutzer in dem NG-Netzwerk unter der zweiten Verwendungsweise ist.

2. Verfahren nach Anspruch 1, wobei der Schritt des Erfassens von zweiten Sicherheitsauthentifizierungsinformationen die folgenden Schritte umfasst:
Umwandeln der ersten Aufrufnachricht in eine erste Service-Anforderung in dem NG-Netzwerk unter der zweiten Verwendungsweise und Senden der ersten Service-Anforderung an ein drittes Netzwerkelement; und Empfangen eines ersten Antwortergebnisses von dem dritten Netzwerkelement, wobei das erste Antwortergebnis die zweiten Sicherheitsauthentifizierungsinformationen umfasst, und wobei das dritte Netzwerkelement ein Netzwerkelement AUSF in dem NG-Netzwerk unter der zweiten Verwendungsweise ist und zum Bereitstellen von Sicherheitsauthentifizierungen für den Benutzer verwendet wird; und
wobei der Schritt des Erfassens von zweiten Abonnementdaten die folgenden Schritte umfasst: Umwandeln der zweiten Aufrufnachricht in eine zweite Service-Anforderung in dem NG-Netzwerk unter der zweiten Verwendungsweise, und Senden der zweiten Service-Anforderung an ein viertes Netzwerkelement; und
Empfangen eines zweiten Antwortergebnisses von dem vierten Netzwerkelement, wobei das zweite Antwortergebnis die zweiten Abonnementdaten umfasst, und wobei das vierte Netzwerkelement ein UMD-Netzwerkelement in dem NG-Netzwerk unter der zweiten Verwendungsweise ist und zum Bereitstellen
von Abonnementdaten verwendet wird.

3. Computerlesbares Speichermedium, auf dem Computerprogramme gespeichert sind, wobei die Computerprogramme, wenn sie von Prozessoren ausgeführt werden, die in jeder der Entitäten enthalten sind, die am Durchführen der Verfahrensansprüche 1 oder 2 beteiligt sind, die jeweiligen entsprechenden Schritte eines beliebigen der Netzwerk-Roaming- und Interkommunikationsverfahren implementieren, die nach einem der Ansprüche 1 bis 2 beschrieben sind.

4. Netzwerk-Roaming- und Interkommunikationssystem, umfassend: eine Roaming- und Interkommunikationsvorrichtung, ein erstes Netzwerkelement, ein Endgerät und ein zweites Netzwerkelement, wobei
das Endgerät, das von einem Benutzer verwendet wird, unter einer zweiten nicht-eigenständigen, NSA, Verwendungsweise zum Roamen von dem NSA-Netzwerk zu einem eigenständigen, SA, Netzwerk konfiguriert ist,
das erste Netzwerkelement zum Empfangen einer Registrierungsanforderung eines Benutzers eines Endgeräts in einem Next-Generation-, NG, Netzwerk unter einer zweiten, NSA, Verwendungsweise konfiguriert ist, wobei das erste Netzwerkelement ein Netzwerkelement AMF in einem NG-Netzwerk unter einer ersten, SA, Verwendungsweise ist und für Sicherheitsmanagement, Mobilitätsmanagement und Verbindungsmanagement des Benutzers verantwortlich ist; N eine ganze Zahl größer oder gleich 2 ist; das erste Netzwerkelement erste Sicherheitsauthentifizierungsinformationen und erste Abonnementdaten durch Kommunizieren mit der Roaming- und Interkommunikationsvorrichtung erfasst, wobei die ersten Sicherheitsauthentifizierungsinformationen die Sicherheitsauthentifizierungsinformationen des Benutzers in dem NG-Netzwerk unter der ersten Verwendungsweise sind, wobei der Benutzer in dem NG-Netzwerk unter der zweiten Verwendungsweise ist, und die ersten Abonnementdaten die Abonnementdaten des Benutzers in dem NG-Netzwerk unter der ersten Verwendungsweise sind, wobei der Benutzer in dem NG-Netzwerk unter der zweiten Verwendungsweise ist; und
das zweite Netzwerkelement zum Empfangen einer Datenservice-Sitzungsanforderung des Benutzers konfiguriert ist, der in dem NG-Netzwerk unter der zweiten Verwendungsweise ist, wobei das zweite Netzwerkelement ein Netzwerkelement SMF in dem NG-Netzwerk unter der ersten Verwendungsweise ist und für Einrichtung, Anpassung und Freigabe einer Sitzung verantwortlich ist; und das zweite Netzwerkelement Service-Anforderungs-Verarbeiten durch Kommunizieren mit der Roaming- und Interkommunikationsvorrichtung vervollständigt,
wobei das erste Netzwerkelement zum Verwenden der folgenden Weisen zum Realisieren des Erfassens von ersten Sicherheitsauthentifizierungsinformationen durch Kommunizieren mit der Roaming- und Interkommunikationsvorrichtung konfiguriert ist:
Senden einer ersten Aufrufnachricht an die Roaming- und Interkommunikationsvorrichtung und Empfangen eines ersten Aufrufergebnisses von der Roaming- und Interkommunikationsvorrichtung, wobei das erste Aufrufergebnis die ersten Sicherheitsauthentifizierungsinformationen umfasst;
das erste Netzwerkelement zum Verwenden der folgenden Weisen zum Realisieren des Erfassens von ersten Abonnementdaten durch Kommunizieren mit der Roaming- und Interkommunikationsvorrichtung konfiguriert ist:
Senden einer zweiten Aufrufnachricht an die Roaming- und Interkommunikationsvorrichtung und Empfangen eines zweiten Aufrufergebnisses von der Roaming- und Interkommunikationsvorrichtung, wobei das zweite Aufrufergebnis die ersten Abonnementdaten umfasst;
das zweite Netzwerkelement zum Verwenden der folgenden Weisen zum Realisieren des Vervollständigens von Service-Anforderungs-Verarbeiten durch Kommunizieren mit der Roaming- und Interkommunikationsvorrichtung konfiguriert ist:
Senden einer Service-Aufrufanforderung an die Roaming- und Interkommunikationsvorrichtung und Empfangen eines Service-Aufrufergebnisses von der Roaming- und Interkommunikationsvorrichtung; und
die Roaming- und Interkommunikationsvorrichtung zum Durchführen mindestens einer der folgenden Gruppen von Schritten konfiguriert ist:
Empfangen einer ersten Aufrufnachricht von einem ersten Netzwerkelement, Erfassen von zweiten Sicherheitsauthentifizierungsinformationen, Umwandeln der zweiten Sicherheitsauthentifizierungsinformationen in erste Sicherheitsauthentifizierungsinformationen und Senden eines ersten Aufrufergebnisses an das erste Netzwerkelement, wobei das erste Aufrufergebnis die ersten Sicherheitsauthentifizierungsinformationen umfasst;
Empfangen einer zweiten Aufrufnachricht von dem ersten Netzwerkelement, Erfassen von zweiten Abonnementdaten, Umwandeln der zweiten Abonnementdaten in erste Abonnementdaten und Senden eines zweiten Aufrufergebnisses an das erste Netzwerkelement, wobei das zweite Aufrufergebnis die ersten Abonnementdaten umfasst; wenn die zweiten Abonnementdaten in die ersten Abonnementdaten umgewandelt werden, wenn die zweiten Abonnementdaten und die ersten Abonnementdaten die gleichen Bedeutungsfelder haben, ein Wert eines entsprechenden Feldes in den zweiten Abonnementdaten auf das gleiche Feld in den ersten Abonnementdaten abgebildet wird; und wenn es Felder in den ersten Abonnementdaten gibt, die nicht in den zweiten Abonnementdaten sind, Werte dieser Felder gemäß der Standardvertragsvorlage eingestellt werden; und
Empfangen einer Service-Aufrufanforderung von dem zweiten Netzwerkelement, Umwandeln der Service-Aufrufanforderung in eine dritte Service-Anforderung in dem NG-Netzwerk unter der zweiten Verwendungsweise und Senden der dritten Service-Anforderung an ein fünftes Netzwerkelement; und Empfangen eines dritten Antwortergebnisses von dem fünften Netzwerkelement, Umwandeln des dritten Antwortergebnisses in ein Service-Aufrufergebnis in dem NG-Netzwerk unter der ersten Verwendungsweise und Senden des Service-Aufrufergebnisses an das zweite Netzwerkelement,
wobei das fünfte Netzwerkelement ein Netzwerkelement in dem NG-Netzwerk unter der zweiten Verwendungsweise ist und zum Bereitstellen eines Datenservice verwendet wird, und N in dem Ausgangs-NG eine ganze Zahl größer oder gleich 2 ist.

## Revendications

1. Procédé d'itinérance et d'intercommunication de réseau dans un cas où un utilisateur d'un terminal selon un deuxième mode de déploiement non-autonome, NSA, effectue une itinérance du réseau NSA vers un réseau autonome, SA, comprenant les étapes consistant à :
recevoir, par un premier élément de réseau, une demande d'enregistrement de l'utilisateur d'un réseau de nouvelle génération, NG, selon un premier mode de déploiement SA ;
transmettre, par le premier élément de réseau, un premier message d'invocation et un deuxième message d'invocation à un appareil d'itinérance et d'intercommunication ;
recevoir, par l'appareil d'itinérance et d'intercommunication, le premier message d'invocation du premier élément de réseau, acquérir des deuxièmes informations d'authentification de sécurité, convertir les deuxièmes informations d'authentification de sécurité en premières informations d'authentification de sécurité, et transmettre un premier résultat d'invocation au premier élément de réseau, le premier résultat d'invocation comprenant les premières informations d'authentification de sécurité ;
recevoir, par l'appareil d'itinérance et d'intercommunication, le deuxième message d'invocation du premier élément de réseau, acquérir des deuxièmes données d'abonnement, convertir les deuxièmes données d'abonnement en premières données d'abonnement, et transmettre un deuxième résultat d'invocation au premier élément de réseau, le deuxième résultat d'invocation comprenant les premières données d'abonnement ; lorsque les deuxièmes données d'abonnement sont converties en premières données d'abonnement, lorsque les deuxièmes données d'abonnement et les premières données d'abonnement ont les mêmes champs de signification, une valeur d'un champ correspondant dans les deuxièmes données d'abonnement est mappée sur le même champ dans les premières données d'abonnement ; et lorsqu'il y a des champs dans les premières données d'abonnement qui ne sont pas dans les deuxièmes données d'abonnement, des valeurs de ces champs sont définies selon un modèle d'abonnement par défaut ; et
recevoir une demande d'invocation de service d'un deuxième élément de réseau, convertir la demande d'invocation de service en une troisième demande de service dans un réseau NG selon un deuxième mode de déploiement, et transmettre la troisième demande de service à un cinquième élément de réseau ; et recevoir un troisième résultat de réponse du cinquième élément de réseau, convertir le troisième résultat de réponse en un résultat d'invocation de service dans un réseau NG selon un premier mode de déploiement, et transmettre le résultat d'invocation de service au deuxième élément de réseau,
le premier élément de réseau étant un élément de réseau AMF dans le réseau NG selon le premier mode de déploiement et étant responsable de la gestion de sécurité, de la gestion de mobilité et de la gestion de connexion d'un utilisateur ; le deuxième élément de réseau étant un élément de réseau SMF dans le réseau NG selon le premier mode de déploiement et étant responsable de l'établissement, de la modification et du dégagement d'une session ; le cinquième élément de réseau étant un élément de réseau dans le réseau NG selon le deuxième mode de déploiement et étant utilisé pour fournir un service de données ; et N, dans le réseau NG initial, étant un entier supérieur ou égal à 2 ; et
les deuxièmes informations d'authentification de sécurité étant les informations d'authentification de sécurité de l'utilisateur dans le réseau NG selon le deuxième mode de déploiement, l'utilisateur étant dans le réseau NG selon le deuxième mode de déploiement, ou les deuxièmes informations d'authentification de sécurité étant les informations de l'utilisateur dans le réseau NG selon le premier mode de déploiement utilisé pour générer les premières informations d'authentification de sécurité, l'utilisateur étant dans le réseau NG selon le deuxième mode de déploiement ; et les premières informations d'authentification de sécurité étant les informations d'authentification de sécurité de l'utilisateur dans le réseau NG selon le premier mode de déploiement, l'utilisateur étant dans le réseau NG selon le deuxième mode de déploiement ; les premières données d'abonnement étant les données d'abonnement de l'utilisateur dans le réseau NG selon le premier mode de déploiement, l'utilisateur étant dans le réseau NG selon le deuxième mode de déploiement ; et les deuxièmes données d'abonnement étant les données d'abonnement de l'utilisateur dans le réseau NG selon le deuxième mode de déploiement, l'utilisateur étant dans le réseau NG selon le deuxième mode de déploiement.

2. Procédé selon la revendication 1, dans lequel l'étape consistant à acquérir des deuxièmes informations d'authentification de sécurité comprend les étapes consistant à :
convertir le premier message d'invocation en une première demande de service dans le réseau NG selon le deuxième mode de déploiement, et transmettre la première demande de service à un troisième élément de réseau ; et recevoir un premier résultat de réponse du troisième élément de réseau, le premier résultat de réponse comprenant les deuxièmes informations d'authentification de sécurité, et le troisième élément de réseau étant un élément de réseau AUSF dans le réseau NG selon le deuxième mode de déploiement et étant utilisé pour fournir une authentification de sécurité pour l'utilisateur ; et
convertir le deuxième message d'invocation en une deuxième demande de service dans le réseau NG selon le deuxième mode de déploiement, et transmettre la deuxième demande de service à un quatrième élément de réseau ; et recevoir un deuxième résultat de réponse du quatrième élément de réseau, le deuxième résultat de réponse comprenant les deuxièmes données d'abonnement, et le quatrième élément de réseau étant un élément de réseau UDM dans le réseau NG selon le deuxième mode de déploiement et étant utilisé pour fournir des données d'abonnement.

3. Moyen de stockage lisible par ordinateur, sur lequel sont stockés des programmes informatiques, les programmes informatiques, lorsqu'ils sont exécutés par des processeurs compris dans chacune des entités impliquées dans la réalisation des revendications de procédé 1 ou 2, mettant en œuvre les étapes correspondantes respectives de l'un quelconque des procédés d'itinérance et d'intercommunication de réseau décrits selon l'une quelconque des revendications 1 à 2.

4. Système d'itinérance et d'intercommunication de réseau, comprenant : un appareil d'itinérance et d'intercommunication, un premier élément de réseau, un terminal et un deuxième élément de réseau,
le terminal, utilisé par un utilisateur, selon un deuxième mode de déploiement non-autonome, NSA, étant configuré pour effectuer une itinérance du réseau NSA vers un réseau autonome, SA,
le premier élément de réseau étant configuré pour recevoir une demande d'enregistrement d'un utilisateur d'un terminal dans un réseau de nouvelle génération, NG, selon un deuxième mode de déploiement, NSA, le premier élément de réseau étant un élément de réseau AMF dans un réseau NG selon un premier mode de déploiement, SA, et étant responsable de la gestion de sécurité, de la gestion de mobilité et de la gestion de connexion de l'utilisateur ; N étant un entier supérieur ou égal à 2 ; le premier élément de réseau acquérant des premières informations d'authentification de sécurité et des premières données d'abonnement en communiquant avec l'appareil d'itinérance et d'intercommunication, les premières informations d'authentification de sécurité étant les informations d'authentification de sécurité de l'utilisateur dans le réseau NG selon le premier mode de déploiement, l'utilisateur étant dans le réseau NG selon le deuxième mode de déploiement, et les premières données d'abonnement étant les données d'abonnement de l'utilisateur dans le réseau NG selon le premier mode de déploiement, l'utilisateur étant dans le réseau NG selon le deuxième mode de déploiement ; et
le deuxième élément de réseau étant configuré pour recevoir une demande de session de service de données de l'utilisateur étant dans le réseau NG selon le deuxième mode de déploiement, le deuxième élément de réseau étant un élément de réseau SMF dans le réseau NG selon le premier mode de déploiement et étant responsable de l'établissement, de la modification et du dégagement d'une session ; et le deuxième élément de réseau complétant le traitement de demande de service en communiquant avec l'appareil d'itinérance et d'intercommunication,
le premier élément de réseau étant configuré pour utiliser les manières suivantes pour réaliser acquérir des premières informations d'authentification de sécurité en communiquant avec l'appareil d'itinérance et d'intercommunication :
transmettre un premier message d'invocation à l'appareil d'itinérance et d'intercommunication, et recevoir un premier résultat d'invocation de l'appareil d'itinérance et d'intercommunication, le premier résultat d'invocation comprenant les premières informations d'authentification de sécurité ;
le premier élément de réseau étant configuré pour utiliser les manières suivantes pour réaliser acquérir des premières données d'abonnement en communiquant avec l'appareil d'itinérance et d'intercommunication :
transmettre un deuxième message d'invocation à l'appareil d'itinérance et d'intercommunication, et recevoir un deuxième résultat d'invocation de l'appareil d'itinérance et d'intercommunication, le deuxième résultat d'invocation comprenant les premières données d'abonnement ;
le deuxième élément de réseau étant configuré pour utiliser les manières suivantes pour réaliser compléter le traitement de demande de service en communiquant avec l'appareil d'itinérance et d'intercommunication :
transmettre une demande d'invocation de service à l'appareil d'itinérance et d'intercommunication, et recevoir un résultat d'invocation de service de l'appareil d'itinérance et d'intercommunication ; et
l'appareil d'itinérance et d'intercommunication étant configuré pour réaliser au moins l'un des groupes d'étapes consistant à :
recevoir un premier message d'invocation d'un premier élément de réseau, acquérir des deuxièmes informations d'authentification de sécurité, convertir les deuxièmes informations d'authentification de sécurité en premières informations d'authentification de sécurité, et transmettre un premier résultat d'invocation au premier élément de réseau, le premier résultat d'invocation comprenant les premières informations d'authentification de sécurité ;
recevoir un deuxième message d'invocation du premier élément de réseau, acquérir des deuxièmes données d'abonnement, convertir les deuxièmes données d'abonnement en premières données d'abonnement, et transmettre un deuxième résultat d'invocation au premier élément de réseau, le deuxième résultat d'invocation comprenant les premières données d'abonnement ; lorsque les deuxièmes données d'abonnement sont converties en premières données d'abonnement, lorsque les deuxièmes données d'abonnement et les premières données d'abonnement ont les mêmes champs de signification, une valeur d'un champ correspondant dans les deuxièmes données d'abonnement est mappée sur le même champ dans les premières données d'abonnement ; et lorsqu'il y a des champs dans les premières données d'abonnement qui ne sont pas dans les deuxièmes données d'abonnement, des valeurs de ces champs sont définies selon le modèle de contrat par défaut ; et
recevoir une demande d'invocation de service du deuxième élément de réseau, convertir la demande d'invocation de service en une troisième demande de service dans le réseau NG selon le deuxième mode de déploiement, et transmettre la troisième demande de service à un cinquième élément de réseau ; et recevoir un troisième résultat de réponse du cinquième élément de réseau, convertir le troisième résultat de réponse en un résultat d'invocation de service dans le réseau NG selon le premier mode de déploiement, et transmettre le résultat d'invocation de service au deuxième élément de réseau,
le cinquième élément de réseau étant un élément de réseau dans le réseau NG selon le deuxième mode de déploiement et étant utilisé pour fournir un service de données, et **N,** dans le réseau NG initial, étant un entier supérieur ou égal à 2.
